# EUROPÄISCHE PATENTANMELDUNG

(11) **EP 2 503 323 A2**
(43) Veröffentlichungstag der Anmeldung: **26.09.2012**
(21) Anmeldenummer: 12161125.5
(22) Anmeldetag: 23.03.2012
(51) Int. Cl.: G01N 21/35

(54) **Vorrichtung und Verfahren zur Messung der räumlichen Verteilung von atmosphärischen Gasen in Bodennähe**

(30) Priorität: 23.03.2011 DE 102011005946
(71) Anmelder: Helmholtz-Zentrum Potsdam Deutsches GeoForschungsZentrum - GFZ, 14473 Potsdam (DE)
(72) Erfinder: Schwank, Mike, 14776 Brandenburg an der Havel (DE); Löhmannsröben, Hans-Gerd, 14476 Golm (DE); Böhm, Michael, 14469 Potsdam (DE); Bens, Oliver, 14469 Potsdam (DE); Henneberg, Oliver, 10713 Berlin (DE)
(74) Vertreter: Müller & Schubert

(57) **Zusammenfassung**

Die Erfindung beschreibt eine Vorrichtung zur Messung der räumlichen Verteilung von Konzentrationen atmosphärischer Gase in Bodennähe, bestehend aus einem Spektrometer (1), mindestens zwei Drehspiegeln (D1),(D2) und mindestens zwei Retroreflektoren (R1),(R2), die an der äußeren Umgrenzung (6) des zu vermessenden Verteilungsraumes angeordnet sind, wobei das Spektrometer im Inneren des zu vermessenden Verteilungsraumes angeordnet ist und mindestens einen Messstrahl aussendet, der auf die Drehspiegel ausrichtbar und vom Drehspiegel über den Retroreflektor zurück zum Spektrometer leitbar ist.

Offenbart ist ferner ein Verfahren zur Messung der räumlichen Verteilung von Konzentrationen atmosphärischer Gase in Bodennähe, wobei man a) mit einem im Inneren des zu vermessenden Verteilungsraumes angeordneten Spektrometer einen Messstrahl erzeugt, b) den Messstrahl mittels sequentiell verstellbarer Drehspiegel nacheinander auf eine Vielzahl von sich an der äußeren Begrenzung des Verteilungsraumes befindlichen Retroreflektoren richtet und c) den jeweils reflektierten Strahl in das Spektrometer zurückleitet und detektiert.

Vom technischen Standpunkt her unterscheideten sich die erfindungsgemäße Vorrichtung und das Verfahren vom Stand der Technik vor allem in dem neuartigen Strahlführungskonzept, das Tomographie auf der Feldskala erlaubt.)

## Beschreibung

Die Erfindung betrifft eine Vorrichtung und ein Verfahren zur Messung der räumlichen Verteilung von Konzentrationen atmosphärischer Gase auf der Feldskala mittels tomographischer Molekülspektroskopie.

Verdampfung und Kondensation von Wasser spielen eine wesentliche Rolle bei der Umverteilung von Energie zwischen der untersten Atmosphärenschicht und der Erdoberfläche. Bis heute ist keine Messmethode bekannt, mit welcher die Konzentration von Wasserdampf in der bodennahen Schicht der Atmosphäre mit räumlicher Auflösung gemessen werden kann. Ebenso verhält es sich mit der räumlichen Erfassung anderer relevanter atmosphärischer Gase wie beispielsweise Methan (CH₄) oder Kohlendioxid (CO₂). Ein Messverfahren zum langfristigen Monitoring der Zusammensetzung der Atmosphäre in unmittelbarer Nähe der Oberfläche (z.B. Boden, Vegetation, Gewässer) auf der Feldskala würde es beispielsweise ermöglichen, grundlegende offene Fragen der Bodenatmung zu klären.

In industriellen Anwendungen wie beispielsweise der Beschichtungs-Technologie (plasma assisted vapor deposition technique, PACVD), gibt es Ansätze, um die räumliche Verteilung von Gaskonzentration und Temperatur aus spektroskopischen Messungen in Kombination mit Tomographie zu erfassen. Da diese Verfahren aber auf wesentlich kleinere Gebiete angewendet werden, können konventionelle Strahlführungs-Strategien wie um die Probe herum rotierende Quellen/Detektoren angewendet werden. Derartige Verfahren werden beispielsweise von Kasyutich und Martin (Kasyutich, V. L., Martin, P. A. "Towards a two-dimensional concentration and temperature laser absorption tomography sensor system." Applied Physics B: Lasers and Optics 1(14) (2010)) oder Wang et al. (Wang, F., K. F. Cen, et al. "Two-dimensional tomography for gas concentration and temperature distributions based on tunable diode laser absorption spectroscopy." Measurement Science and Technology, 21 (2010)) beschrieben.

Einen Überblick über tomographische Anwendungen in der Atmosphäre gibt die Dissertation von Hartl (Hartl, A. "Tomographic Reconstruction of 2-D Atmospheric Trace Gas Distributions from Active DOAS Measurements"; Combined Faculties for the Natural Sciences and for Mathematics of the Ruperto-Carola University of Heidelberg, Doctor of Natural Sciences, Thesis (2007)). Nachteil des Standes der Technik ist es, dass ein hoher technischer Aufwand erforderlich ist und nur eine geringe räumliche Auflösung zu erzielen ist.

Aus US-A-3925666 ist ein Detektionssystem zur Messung von Schwefelwasserstoff in Räumen bekannt, mit dem ein mögliches Leck in einem im einem Raum aufbewahrten Speicher detektiert werden kann. Das Detektionssystem besteht aus mehreren Sendeeinheiten, Spiegeln, Retroreflektoren und Detektoreinheiten, wobei die Sendeeinheiten und Detektoren jeweils an der äußeren Peripherie des zu überwachenden Raumes abgeordnet sind. Nachteilig an diesem System ist, dass zur Erkennung des Lecks mindestens zwei Sende-/Detektionseinheiten erforderlich sind.

In AT-B-235404 wird eine Vorrichtung zum Messen von Gas mit einer Infrarot-Strahlungsquelle beschrieben. Die Vorrichtung umfasst einen Retroreflektor, einen Empfänger, einen Detektor, ein Fokussiermittel zum Erzeugen eines Bildes und einen Spektralfilter.

Ein optischer Gasanalysator mit einem Detektor und einem Breitbandemitter ist ferner in GB-A-2274163 offenbart.

Ferner sind Open-Path-Spektrometer zur Messung von Spurengasen in der Atmosphäre über Pfadlängen von mehreren 100 Metern kommerziell verfügbar. Jedoch eignen sich diese nicht zur Bestimmung von Isotopologie (beispielsweise ¹²CO₂/¹³CO₂) unter atmosphärischen Bedingungen.

Aufgabe der vorliegenden Erfindung ist es, die Nachteile des Standes der Technik zu überwinden und die spektroskopische Messung von atmosphärischen Gasen mit räumlicher Auflösung auf der Feldskala zu ermöglichen.

Die Aufgabe wird durch eine Vorrichtung gelöst, welche die Merkmale des Hauptanspruchs aufweist. Vorteilhafte Ausgestaltungen der erfindungsgemäßen Vorrichtung sind in den abhängigen Unteransprüchen gekennzeichnet.

Die Aufgabe wird ferner durch ein Verfahren gelöst, welches die Merkmale des unabhängigen Verfahrensanspruchs aufweist. Vorteilhafte Ausgestaltungen des erfindungsgemäßen Verfahrens sind in den abhängigen Verfahrensansprüchen gekennzeichnet.

Gegenstand der vorliegende Erfindung ist eine Vorrichtung zur Messung der räumlichen Verteilung von Konzentrationen atmosphärischer Gase in Bodennähe, bestehend aus einem Spektrometer, mindestens zwei Drehspiegeln und mindestens zwei Retroreflektoren, wobei die Retroreflektoren an der äußeren Umgrenzung des zu vermessenden Verteilungsraumes angeordnet sind, wobei das Spektrometer im Inneren des zu vermessenden Verteilungsraumes angeordnet ist und mindestens einen Messstrahl aussendet, der auf die Drehspiegel ausrichtbar und vom Drehspiegel über den Retroreflektor zurück zum Spektrometer leitbar ist. Dabei ist es bevorzugt, dass der Messstrahl, der auf einen ersten Drehspiegel in unmittelbarer Nähe des Spektrometers gerichtet ist, von diesem auf einen oder nacheinander mehrere weitere Drehspiegel im Randbereich des zu untersuchenden Flächenbereiches gerichtet wird, die den Strahl auf einen oder nacheinander auf mehrere Retroreflektoren im Randbereich des zu untersuchenden Flächenbereiches richten, und die Retroreflektoren dann jeweils auf dem gleichen Weg die Rückreflexion des Messstrahls bis in das Spektrometer bewirken.

Erfindungsgemäß bevorzugt ist eine Vorrichtung, wobei das Spektrometer drehbar angeordnet ist, um den ausgesendeten Messstrahl in zeitlicher Abfolge nacheinander auf die Drehspiegel auszurichten.

Erfindungsgemäß bevorzugt ist auch eine Vorrichtung, wobei das Spektrometer eine Vorrichtung zum Aufteilen oder Vervielfältigen des Messstrahls aufweist, welche mindestens zwei Messstrahlen erzeugt, wobei jeder Messstrahl auf einen anderen Drehspiegel ausrichtbar ist. Eine derartige Vorrichtung zum Aufteilen oder Vervielfältigen des Messstrahls kann erfindungsgemäß ein Strahlteiler oder ein Splitter sein. Bevorzugt ist somit also ein Spektrometer, dass einen Strahlteiler aufweist, der den Messstrahl in mindestens zwei Teilstrahlen aufteilt, die jeweils auf einen separaten Drehspiegel in unmittelbarer Nähe des Spektrometers gerichtet werden, von diesen auf Drehspiegel im Randbereich des zu untersuchenden Flächenbereiches gelenkt werden, die die Stahlen auf einen oder nacheinander auf mehrere Retroreflektoren im Randbereich des zu untersuchenden Flächenbereiches richten, und die Retroreflektoren dann jeweils auf dem gleichen Weg die Rückreflexion des Messstrahls bis in das Spektrometer bewirken.

Erfindungsgemäß besonders bevorzugt ist eine Vorrichtung, wobei mindestens einer der mindestens zwei Drehspiegel, auf welchen der jeweilige Messstrahl ausrichtbar ist, in unmittelbarer Nähe zum Spektrometer, jedenfalls aber nicht an der äußeren Umgrenzung des zu vermessenden Verteilungsraumes angeordnet ist.

Bevorzugt ist ferner eine Vorrichtung, wobei die Drehspiegel sequentiell steuerbar sind, wobei in jeder diskreten Stellung der jeweiligen Drehspiegel ein anderer Drehspiegel oder Retroreflektor ansteuerbar ist. Es ist erfindungsgemäß also bevorzugt, dass die Drehspiegel in der Nähe des Spektrometers und im Randbereich des zu untersuchenden Flächenbereiches diskret sequentiell steuerbar sind, wobei jede diskrete Stellung der Drehspiegel einen in sich zurückführenden Strahlweg zu einem der Retrorefelktoren realisiert.

Weiterhin bevorzugt ist eine Vorrichtung, wobei mindestens einer der mindestens zwei Drehspiegel an der äußeren Umgrenzung des zu vermessenden Verteilungsraumes angeordnet ist.

Ganz besonders bevorzugt ist eine Vorrichtung, bei der die Vorrichtung ein Spektrometer mit einem Splitter oder einem Strahlteiler aufweist, mittels welcher das Spektrometer eine Mehrzahl von Messstrahlen erzeugt, eine ebensolche Mehrzahl von Drehspiegeln aufweist sowie eine Vielzahl von Retroreflektoren aufweist, wobei die Drehspiegel und/oder die Retroreflektoren auf der äußeren Umgrenzung des zu vermessenden Verteilungsraumes angeordnet sind und somit die Fläche des zu vermessenden Verteilungsraum bilden, und wobei das Spektrometer im zentralen Bereich des Verteilungsraumes angeordnet ist. Bevorzugt ist erfindungsgemäß weiterhin eine Vorrichtung, wobei das Spektrometer ein Spektrometer zur Molekülspektroskopie ist.

Weiterhin bevorzugt ist eine Vorrichtung, wobei das Spektrometer einen Strahlformer zu Formung jedes einzelnen Messstrahls und einen Detektor zur Messung jedes einzelnen eingehenden Strahls sowie eine Laserlichtquelle aufweist.

Ganz besonders bevorzugt ist eine Vorrichtung, wobei der ausgehende Messstrahl und der eingehende Strahl im Spektrometer koaxial führbar sind.

Gegenstand der vorliegenden Erfindung ist weiterhin ein Verfahren zur Messung der räumlichen Verteilung von Konzentrationen atmosphärischer Gase in Bodennähe, wobei man
a) mit einem im zentralen Bereich des zu vermessenden Verteilungsraumes angeordneten Spektrometer einen Messstrahl erzeugt,
b) den Messstrahl mittels sequentiell verstellbarer Drehspiegel nacheinander auf eine Vielzahl von sich an der äußeren Begrenzung des Verteilungsraumes befindlichen Retroreflektoren richtet und
c) den jeweils reflektierten Strahl in das Spektrometer zurückleitet und detektiert.

Erfindungsgemäß bevorzugt ist ein Verfahren, wobei man im Schritt a) eine Mehrzahl von Messstrahlen gleichzeitig erzeugt, und im Schritt b) jeden Messstrahl auf einen anderen Drehspiegel richtet.

Weiterhin bevorzugt ist ein Verfahren, wobei man im Schritt b) die jeweiligen Drehspiegel nacheinander auf alle in der Sichtachse angeordneten Retroreflektoren richtet.

Im Sinne der vorliegenden Erfindung sind alle Spektrometer geeignet, welche zur Bestimmung von Molekülparametern geeignet sind, einschließlich der Bestimmung der Isotopen-Verteilung. Dazu zählen Spektrometer, die mit optischen Systemen im sichtbaren oder nichtsichtbaren Wellenlängenbereich arbeiten. Hierzu zählen unter anderem IR-Spetrometer, NIR-Spektrometer, UV-Spektrometer, Mikrowellen-Spektrometer. Ein besonderer Vorteil der vorliegenden Erfindung ist es, dass das Spektrometer stationär im Inneren des zu vermessenden Feldes angeordnet ist. Die Art und Größe des Spektrometers unterliegt daher keinen Beschränkungen im Hinblick auf die apparativen Parameter.

Nachfolgend werden Begriffe definiert, wie diese im Sinne der Erfindung zu verstehen sind.

Der Begriff "Verteilungsraum" kennzeichnet den Raum, im welchem sich die zu messenden Gase befinden. Dieser Verteilungsraum wird von einer "äußeren Umgrenzung" definiert, wobei die Umgrenzung durch die auf oder an dieser Umgrenzung angeordneten Retroreflektoren und Drehspiegel, bzw. durch gedachte Verbindungslinien zwischen benachbarten Retroreflektoren und Drehspiegeln definiert ist. Der Verteilungsraum kann daher in Wesentlichen jede geometrische Form annehmen, also kreisförmig, oval, rechteckig trapezförmig oder in Form eines n-Ecks gestaltet sein.

Der Begriff "im Inneren des Verteilungsraumes" bezeichnet jede Position innerhalb des Verteilungsraumes. Diese Position kann der Mittelpunkt, der Schwerpunkt oder ein anderen Bereich innerhalb des Verteilungsraumes sein, der nicht Bestandteil der Umgrenzung ist.

Der Begriff "in unmittelbarer Nähe" des Spektrometers bezeichnet im Sinne der Erfindung einen Abstand, der zwischen 0,01 und 10 Metern beträgt, wenn im Vergleich hierzu der Verteilungsraum eine maximale Breite von 500 Metern aufweist.

Der Begriff "zentraler Bereich" bezeichnet eine Position innerhalb des Verteilungsraumes und kann der Mittelpunkt, der Schwerpunkt oder ein anderen Bereich innerhalb des Verteilungsraumes sein, der nicht Bestandteil der Umgrenzung ist.

Die Erfindung wird an Hand der nachfolgenden Beschreibung unter Bezugnahme auf die Figuren näher erläutert.

Es zeigt:
Fig.1 einen schematischen Aufbau eines Ausführungsbeispiels der erfindungsgemäßen Vorrichtung;
Fig. 2 einen schematischen Aufbau eines zweiten Ausführungsbeispiels der erfindungsgemäßen Vorrichtung;
Fig. 3 einen schematischen Aufbau eines dritten Ausführungsbeispiels der erfindungsgemäßen Vorrichtung; und
Fig. 4 den schematischen Aufbau eines Spektrometers zur Verwendung in einer Vorrichtung gemäß den Figuren 1 bis 3.

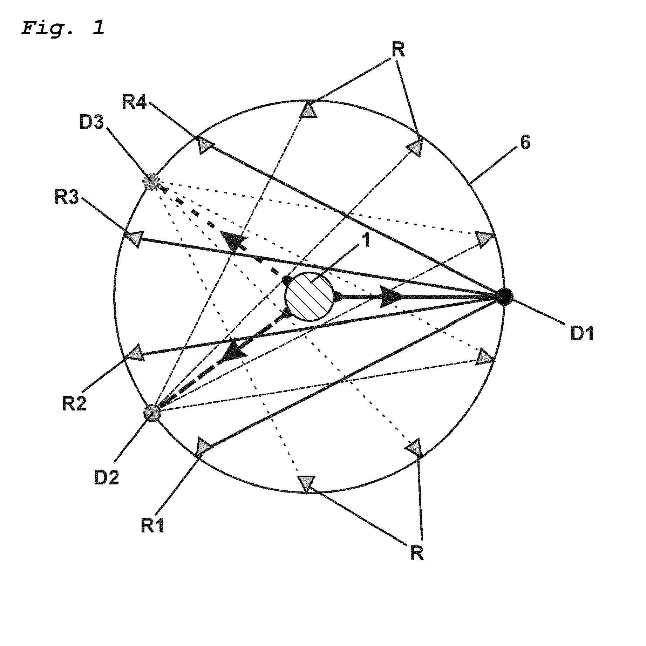

Das erfindungsgemäße Messprinzip vereinigt einen transmissions-spektroskopischen Ansatz im Infrarot (IR) und mittleren Infrarot (MIR) mit einem tomographischen Ansatz. Figur 1 zeigt eine vereinfachte Version des Aufbaus: Das Spektrometer 1 (schraffierter Kreis) befindet sich in Zentrum der Fläche über welcher die Zusammensetzung der bodennahen Atmosphäre gemessen wird. Der Durchmesser dieser Fläche wird typischerweise 100 m betragen. An der Peripherie 6 der Untersuchungs-Fläche werden mehrere automatisierte Dreh-Spiegel D1, D2,... (Kreise) sowie Retroreflektoren R, R1, R2,... (Dreiecke) installiert. Die Figur zeigt den Aufbau für drei fächerartige Verteilungen von Laser-Strahlen, wobei jeder Fächer aus vier einzelnen Stahlen besteht. Die Strahlen-Fächer werden synchron erzeugt, indem die einzelnen Strahlen sequentiell von dem jeweiligen Dreh-Spiegel D, D1, D2, ... gesteuert werden.

Am Beispiel des mit durchgehenden Linien dargestellten Fächers sei der Strahlengang erklärt: Das Spektrometer 1 schickt einen Laser-Strahl auf den automatisierten Drehspiegel D1. Dieser lenkt den Strahl auf den Retroreflektor R1 von wo er zum Drehspiegel D1 zurückgeworfen wird. Von dort wird er wieder zum Spektrometer gelenkt und die spektrale Intensität wird gemessen. Nun wird der Drehspiegel so positioniert, dass die Pfade zwischen D1 und R2, R3 und R4 entstehen, bis schlussendlich der gesamte Fächer ausgehend von D1 abgescannt ist. Wie bereits gesagt, erfolgen diese Scanns synchron für alle von den Drehspiegeln D1, D2, D3 ausgehenden Fächer. Dies ist notwendig um die totale Messzeit so kurz wie möglich zu machen, um Änderungen der Gaskonzentrationsverteilung während der totalen Scannzeit zu minimieren, was für die erfolgreiche tomographische Inversion entscheidend ist.

Die relativ große Dimension, auf welche die spektroskopischen Open-Path-Messungen in Kombination mit der tomographischen Inversion angewendet werden soll, würde es technisch sehr aufwändig machen, die Quelle und den Detektor an gegenüberliegenden Orten zu montieren und diese dann um das Zentrum des zu vermessenden Gebietes zu rotieren. Aus diesem Grund werden wie in Figur 1 dargestellt, die Quellen (Laser) und die Detektoren in einem zentralen Spektrometer 1, das sich in der Mitte des Untersuchungsgebietes befindet, platziert. Dabei kann es vorgesehen sein, dass das Spektrometer drehbar gelagert ist, um Strahlen in unterschiedliche Richtungen abgeben zu können. Dies ist eine Ausführungsform der erfindungsgemäßen Vorrichtung.

Allerdings ist erfindungsgemäß die Geometrie des zu vermessenden Verteilungsraumes nicht beschränkt. Das Ausführungsbeispiel gemäß der Figur 1 zeigt eine kreisförmige Anordnung der Drehspiegel und der Retroreflektoren. Dabei bildet die Peripherie des Kreises, auf welchem die Retroreflektoren angeordnet sind, die Umgrenzung des zu vermessenden Verteilungsraumes. Eine weitere erfindungsgemäße Anordnung des Spektrometers, der Drehspiegel und der Retroreflektoren zueinander kann erfindungsgemäß auch derart ausgestaltet sein, dass jeweils Drehspiegel und Retroreflektoren beliebig um den Verteilungsraum herum angeordnet sind. Auch in diesem Falle ist das Spektrometer im Bereich des eigentlichen Verteilungsraumes, der zu vermessen ist, angeordnet, während die Drehspiegel und die Retroreflektoren an den Begrenzungen des Verteilungsraumes angeordnet sind. Entscheidend für eine tomographische Messung ist es lediglich, dass sich die Strahlengänge der Messstrahlen im eigentlichen Verteilungsraum so oft wie möglich kreuzen.

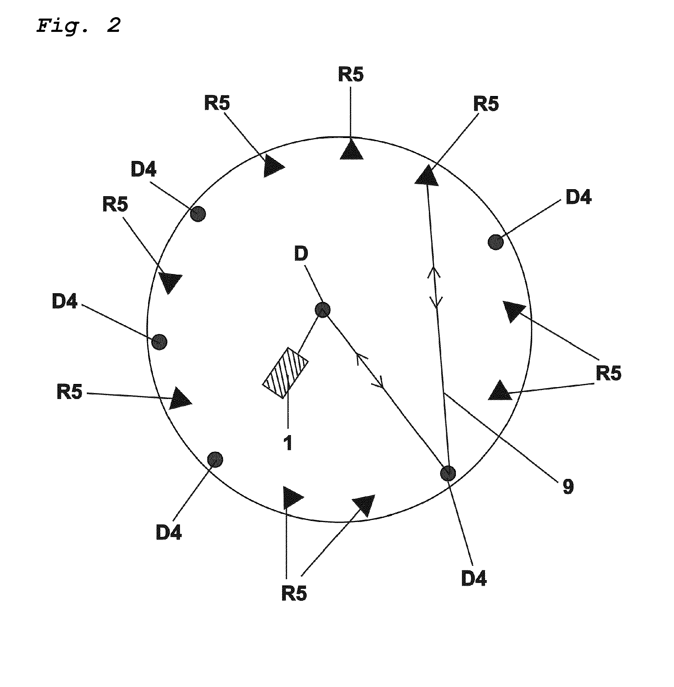

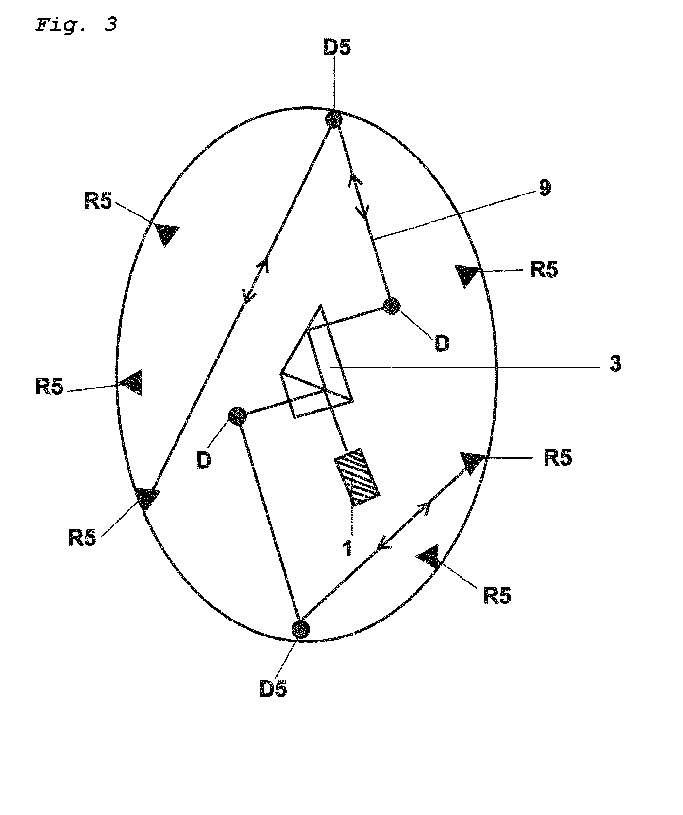

In den Figuren 2 und 3 sind weitere Ausführungsformen der erfindungsgemäßen Vorrichtung gezeigt. In der Figur 2 ist das Spektrometer 1 im Inneren des Verteilungsraumes angeordnet. Der Strahl 9, der aus dem Spektrometer 1 austritt wird mittels des Drehspiegels D, der in der Nähe des Spektrometers, jedenfalls aber nicht auf der äußeren Umgrenzung des Verteilungsraumes angeordnet ist, gelenkt. Von dort wird der Strahl 9 zunächst auf einen Drehspiegel D4 gelenkt, der auf der äußeren Umgrenzung des Verteilungsraumes liegt, und von dort zu den jeweils erreichbaren Retroreflektoren R5 geleitet und über den gleichen Strahlverlauf wieder zurück zum Spektrometer gelenkt, wo die Messung im Detektor erfolgt.

In der Figur 3 ist wiederum ein Spektrometer 1 im Inneren des Verteilungsraumes angeordnet. Im vorliegenden Fall hat der Verteilungsraum beispielsweise eine ovale nahezu Grundfläche. Der Strahl 9 aus dem Spektrometer 1 wird nun zunächst in einem Strahlteiler oder Splitter 3 in Teilstrahlen zerlegt, welche dann jeweils auf in der Nähe des Spektrometers 1 angeordnete Drehspiegel D geleitet werden. Der weitere Strahlengang 9 entspricht dann dem, der in den Figuren 1 und 2 dargestellt ist.

Die Steuerung des Messvorganges kann mittels eines Computers oder Rechner erfolgen, der die Drehspiegel ansteuert und die Messsignale aufzeichnet und auswertet. Derartige Systeme sind an sich bekannt. Vorteilhafterweise kann die Steuerung der Drehspiegel auch derart gestaltet werden, dass die gesamte Messanordnung zunächst mittels der Stellung der Drehspiegel gescannt wird. Dabei erkennt der Rechner, bei welchen diskreten Stellungen der Drehspiegel Reflexe auftreten. Diese Positionen der Drehspiegel werden dann abgespeichert und können für die spätere Messung, nach Abschluss dieser Kalibrierung, automatisiert ausgeführt werden. Das System kann also derart betrieben werden, dass dieses zunächst die Anordnung der Drehspiegel und Retroreflektoren lernt und dann die Messungen ausführt. Dies hat den Vorteil, dass bei Messungen im Feld Abweichungen von der genauen Position der Drehspiegel und Retroreflektoren keinen Einfluss auf die Messungen haben.

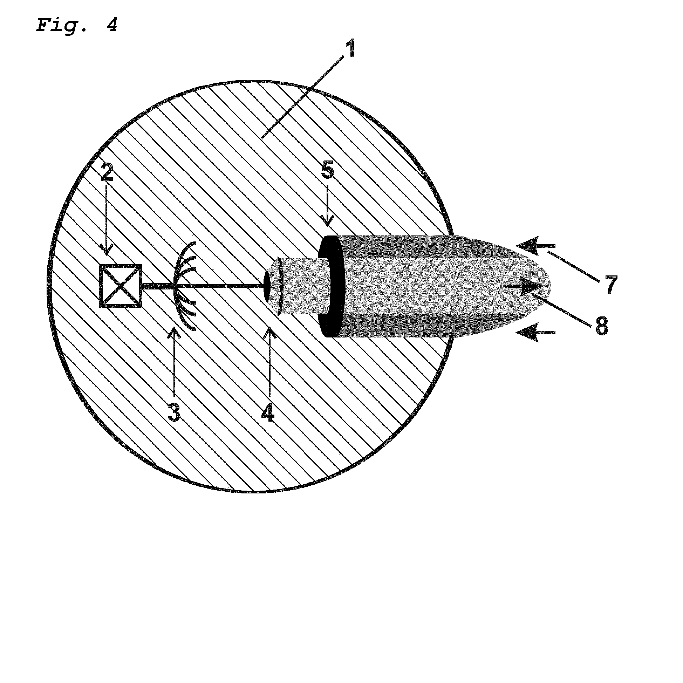

Der schematische Aufbau dieses Spektrometers 1 ist in Figur 4 dargestellt. Das Spektrometer 1 besteht aus einem durchstimmbaren Laser 2 (z. B. DFB-Laser), dessen Wellenlängen sehr genau und schmalbandig (<0,5 pm) abgestimmt werden können. Anschließend wird dieses monochromatische Licht auf mehrere Pfade aufgeteilt um die entsprechende Anzahl der Fächer realisieren zu können. Dazu werden die Strahlen an den optischen Ausgänge des Splitters 3 zu Strahlen geformt, die dann gemäß Figur 1 in ein flächenüberspannendes Netz von Strahlen überführt werden. Dieses Netz (bestehend aus mehreren Fächern, von denen jeder aus einer Vielzahl von Einzelstrahlen besteht) wird dann dazu genutzt, die entsprechenden spektralen Transmissionen der Pfade zu messen, um daraus schließlich die ortsaufgelöste Konzentrationsinformation durch tomographische Inversion zu gewinnen. Es kann aber auch vorgesehen sein, den Splitter nicht zu verwenden und den Strahl direkt auf einen Drehspiegel zu richten, der in der Nähe des Spektrometers, also nicht am äußeren Rand des Verteilungsraumes angeordnet ist. Weiterhin kann vorgesehen sein, den Strahl außerhalb des Spektrometers mit einem Strahlteiler oder Splitter in mehrere Teilstrahlen zu zerlegen, wobei dann jeder Teilstrahl wiederum auf einen in der Nähe des Spektrometers angeordneten Drehspiegel leitbar ist.

Vom technischen Standpunkt her unterscheiden sich die erfindungsgemäße Vorrichtung und das Verfahren vom Stand der Technik vor allem in dem neuartigen Strahlführungskonzept, das Tomographie auf der Feldskala erlaubt. Der Einsatz eines derartigen erfindungsgemäßen Systems für bodenkundliche Fragestellungen ist neu.

Ein wesentlicher Vorteil der erfindungsgemäßen Vorrichtung besteht darin, dass es möglich ist, mit nur einer Sende-/Detektoreinheit einen großen Flächenbereich mit einer großen tomographischen Überdeckung zu erfassen. Insbesondere kann die räumliche Verteilung der Konzentration atmosphärischer Gase in Bodennähe sehr präzise bestimmt werden.

Die erfindungsgemäße Vorrichtung und das erfindungsgemäße Verfahren lassen sich somit zur ortsaufgelösten Molekülspektroskopie auf der Feldskala verwenden. Wegen der per se relativ kurzen Messzeit der Open-Path-Messungen und der Möglichkeit, die Drehspiegel in kurzen Zeitintervallen schnell und präzise einzustellen, ist es erfindungsgemäß auch möglich, orts- und zeitaufgelöste Messungen auf der Feldskala durchzuführen.

### Bezugzeichenliste

- 1: Spektrometer
- 2: Laser
- 3: Splitter/Strahlteiler
- 4: Strahlformer
- 5: Detektor
- 6: Begrenzung Verteilungsraum
- 7: eingehender Strahl
- 8: ausgehender Strahl
- 9: Strahlverlauf
- D: Drehspiegel
- D1, D2, D3, D4, D5: Drehspiegel
- R, R1, R2, R3, R4, R5: Retroreflektoren

## Patentansprüche

1. Vorrichtung zur Messung der räumlichen Verteilung von Konzentrationen atmosphärischer Gase in Bodennähe, bestehend aus einem Spektrometer, mindestens zwei Drehspiegeln und mindestens zwei Retroreflektoren, wobei die Retroreflektoren an der äußeren Umgrenzung des zu vermessenden Verteilungsraumes angeordnet sind, und wobei das Spektrometer im Inneren des zu vermessenden Verteilungsraumes angeordnet ist und mindestens einen Messstrahl aussendet, der auf die Drehspiegel ausrichtbar und von mindestens einem Drehspiegel über den Retroreflektor zurück zum Spektrometer leitbar ist.

2. Vorrichtung, gemäß Anspruch 1, **dadurch gekennzeichnet, dass** das Spektrometer drehbar angeordnet ist, um den ausgesendeten Messstrahl nacheinander auf die Drehspiegel auszurichten.

3. Vorrichtung, gemäß Anspruch 1, **dadurch gekennzeichnet, dass** das Spektrometer eine Vorrichtung zum Aufteilen oder Vervielfältigen des Messstrahls aufweist, welche mindestens zwei Messstrahlen erzeugt, wobei jeder Messstrahl auf einen anderen Drehspiegel ausrichtbar ist.

4. Vorrichtung, gemäß Anspruch 1, **dadurch gekennzeichnet, dass** mindestens einer der mindestens zwei Drehspiegel, auf welchen der jeweilige Messstrahl ausrichtbar ist, in unmittelbarer Nähe zum Spektrometer, jedenfalls aber nicht an der äußeren Umgrenzung des zu vermessenden Verteilungsraumes, angeordnet ist.

5. Vorrichtung, gemäß mindestens einem der voranstehenden Ansprüche, **dadurch gekennzeichnet, dass** die Drehspiegel sequentiell steuerbar sind, wobei in jeder diskreten Stellung der jeweiligen Drehspiegel ein anderer Drehspiegel oder Retroreflektor ansteuerbar ist.

6. Vorrichtung, gemäß mindestens einem der Ansprüche 1 bis 3, **dadurch gekennzeichnet, dass** mindestens einer der mindestens zwei Drehspiegel an der äußeren Umgrenzung des zu vermessenden Verteilungsraumes angeordnet ist.

7. Vorrichtung, gemäß mindestens einem der voranstehenden Ansprüche, **dadurch gekennzeichnet, dass** die Vorrichtung ein Spektrometer mit einem Splitter oder einem Strahlteiler aufweist, mittels welcher das Spektrometer eine Mehrzahl von Messstrahlen erzeugt, eine ebensolche Mehrzahl von Drehspiegeln aufweist sowie eine Vielzahl von Retroreflektoren aufweist, wobei die Drehspiegel und/oder die Retroreflektoren auf äußeren Umgrenzung des zu vermessenden Verteilungsraumes angeordnet sind und somit die Fläche den zu vermessenden Verteilungsraum bilden, und wobei das Spektrometer im zentralen Bereich des Verteilungsraumes angeordnet ist.

8. Vorrichtung, gemäß mindestens einem der voranstehenden Ansprüche, **dadurch gekennzeichnet, dass** das Spektrometer ein Spektrometer zur Molekülspektroskopie ist.

9. Vorrichtung, gemäß mindestens einem der voranstehenden Ansprüche, **dadurch gekennzeichnet, dass** das Spektrometer einen Strahlformer zur Formung jedes einzelnen Messstrahls und einen Detektor zur Messung jedes einzelnen eingehenden Strahls sowie eine Laserlichtquelle aufweist.

10. Vorrichtung, gemäß mindestens einem der voranstehenden Ansprüche, **dadurch gekennzeichnet, dass** der ausgehende Messstrahl und der eingehende Strahl im Spektrometer koaxial führbar sind.

11. Verfahren zur Messung der räumlichen Verteilung von Konzentrationen atmosphärischer Gase in Bodennähe, wobei man
a) mit einem im zentralen Bereich des zu vermessenden Verteilungsraumes angeordneten Spektrometer einen Messstrahl erzeugt,
b) den Messstrahl mittels sequentiell verstellbarer Drehspiegel nacheinander auf eine Vielzahl von sich an der äußeren Begrenzung des Verteilungsraumes befindlichen Retroreflektoren richtet und
c) den jeweils von den Retroreflektoren reflektierten Strahl in das Spektrometer zurückleitet und detektiert.

12. Verfahren, gemäß Anspruch 11, **dadurch gekennzeichnet, dass** man im Schritt a) eine Mehrzahl von Messstrahlen gleichzeitig erzeugt, und im Schritt b) jeden Messstrahl auf einen anderen Drehspiegel richtet.

13. Verfahren, gemäß Anspruch 12, **dadurch gekennzeichnet, dass** man im Schritt b) die jeweiligen Drehspiegel nacheinander auf alle in der Sichtachse angeordneten Retroreflektoren richtet.
